# EUROPEAN PATENT APPLICATION

(11) **EP 2 629 409 A1**
(43) Date of publication of application: **21.08.2013**
(21) Application number: 11832477.1
(22) Date of filing: 06.10.2011
(51) Int. Cl.: H02M 7/06, H02J 7/00, H02P 9/00

(54) **REGULATOR, BATTERY CHARGING APPARATUS, AND BATTERY CHARGING SYSTEM**

(30) Priority: 13.10.2010 JP 2010230819
(71) Applicant: Shindengen Electric Manufacturing Co., Ltd., Tokyo 100-0004 (JP)
(72) Inventor: KAWAMURA Asato, Hanno-shi Saitama 357-8585 (JP); ARAI Tatsuya, Hanno-shi Saitama 357-8585 (JP)
(74) Representative: Liesegang, Eva
(86) International application number: PCT/JP2011/073084
(87) International publication number: WO 2012/050042

(57) **Abstract**

A regulator comprises a rectifying circuit that rectifies an alternating current output from an output terminal of each phase of the three-phase alternating-current generator "101" and passes a charging current to the battery "B"; first to third semiconductor devices "T1", "T2", "T3" each of which has a first terminal "x1" to which a control signal is input, a second terminal "x2" connected to a negative side of the battery "B", a third terminal "x3" connected to a positive side of the battery "B", and a fourth terminal "x4" connected to an output terminal of a corresponding phase "U", "V", "W" of the three-phase alternating-current generator "101"; and a controller "CON" that detects a charging voltage for the battery and outputs the control signals based on a detection result.

## Description

### [Technical Field of the Invention]

The present invention relates to a regulator that control charging of a battery by a three-phase alternating-current generator, a battery charging apparatus and a battery charging system.

### [Background Art]

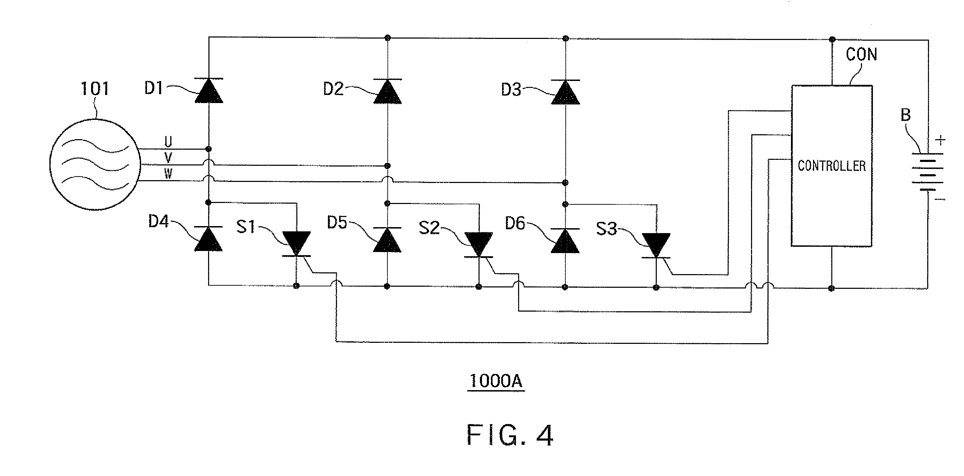

Figure 4 is a diagram showing an example of a configuration of a conventional battery charging system 1000A.

As shown in Figure 4, a regulator in the conventional battery charging system 1000A (see JP2010-154681A, for example) makes a rectifying circuit, which is composed of six diodes "D1" to "D6", rectify the output current of a three-phase alternating-current generator 101 and charges a battery "B" with the rectified current while charging the battery.

When the battery "B" is fully charged, a controller "CON" of the regulator detects the battery voltage and turns on thyristors "S1 to "S3", which are opposite in polarity to and connected in parallel with the diodes "D4" to "D6", respectively, by passing a driving current through the thyristors "S1" to S3".

In this way, the output of the three-phase alternating-current generator 101 and the negative side of the battery "B" are short-circuited, and charging of the battery "B" is controlled.

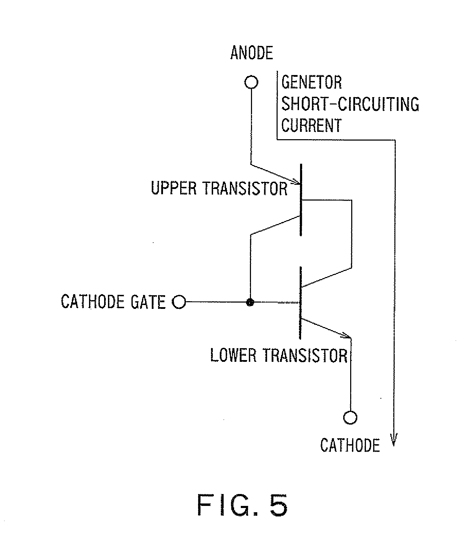

Figure 5 is a circuit diagram showing an example of a circuit configuration of the first to third thyristors "S1" to "S3" of the battery charging apparatus shown in Figure 4.

As shown in Figure 5, according to the prior art described in Patent Document 1, when the output of the three-phase alternating-current generator 101 is short-circuited, a generator short-circuit current flows between the anode and the cathode of the thyristors "S1" to "S3" to generate a Joule heat.

The heat quantity is the product of the generator short-circuit current and the on-voltage of the thyristors "S1" to "S3". The on-voltage of the thyristors "S1" to "S3" is about 1.3 V (the sum of the base-emitter voltage "Vbe" of the upper transistor and the collector-emitter voltage "Vce" of the lower transistor), for example. Therefore, if the generator short-circuit current is 10 A, 13 W of heat is generated.

Therefore, for example, a large radiator fin is needed to cool the thyristors "S1 to "S3".

Besides, since the thyristor has a self-holding characteristic, in order to turn off the thyristors "S1" to "S3" that have once been turned on, a certain turn-off time is required to allow the current flowing between the anode and the cathode of the thyristors "S1" to "S3" to be equal to or smaller than a holding current.

For example, when the engine connected to the three-phase alternating-current generator 101 is running at a high number of revolutions, the output of the three-phase alternating-current generator 101 has a high frequency, and the certain turn-off time cannot be provided to allow the current flowing between the anode and the cathode of the thyristors "S1" to "S3" to be equal to or smaller than the holding current. In this case, the thyristors are not turned off.

This means that the battery "B" is not charged with the output of the three-phase alternating-current generator 101 and can pose a problem of battery exhaustion.

As described above, the regulator according to the prior art has high power loss and cannot appropriately control charging of the battery when the output of the three-phase alternating-current generator is high.

### [Disclosure of the Invention]

A regulator according to one aspect of the invention is a regulator that controls charging of a battery by a three-phase alternating-current generator, comprising:
a rectifying circuit that rectifies an alternating current output from an output terminal of each phase of the three-phase alternating-current generator and passes a charging current to the battery;
first to third semiconductor devices each of which has a first terminal to which a control signal is input, a second terminal connected to a negative side of the battery, a third terminal connected to a positive side of the battery, and a fourth terminal connected to an output terminal of a corresponding phase of the three-phase alternating-current generator; and
a controller that detects a charging voltage for the battery and outputs the control signals based on a detection result,
wherein the first to third semiconductor devices pass a current between the fourth terminal and the second terminal in response to a current of a prescribed value or larger flowing between the third terminal and the second terminal and continue passing the current between the fourth terminal and the second terminal while the current continues flowing between the third terminal and the second terminal, and
the controller outputs the control signals to the first terminals of the first to third semiconductor devices to connect the second terminals and the fourth terminals of the first to third semiconductor devices to each other, thereby short-circuiting the output terminal of each phase of the three-phase alternating-current generator and the negative side of the battery to each other, when the charging voltage for the battery is equal to or higher than a preset threshold voltage.

In the regulator, each of the first to third semiconductor devices has:
a first bipolar transistor of a first conductivity type that is connected to the first terminal at the base thereof, to the second terminal at the emitter thereof, and to the fourth terminal at the collector thereof; and
a second bipolar transistor of a second conductivity type that is connected to the fourth terminal at the base thereof, to the first terminal at the collector thereof, and to the third terminal at the emitter thereof.

The regulator may further comprise
first to third resistive elements that are connected between the positive side of the battery and the third terminals of the first to third semiconductor devices, respectively.

The regulator may further comprise
first to third switching circuits that are connected between the positive side of the battery and the third terminals of the first to third semiconductor devices, respectively, are controlled by the controller, are turned on to connect the positive side of the battery and the third terminals of the first to third semiconductor devices to each other, respectively, and turned off to disconnect the positive side of the battery and the third terminals of the first to third semiconductor devices from each other, respectively, and
the controller stops supplying the control signals to the first terminals and turning off the first to third switching circuits when the charging voltage for the battery is lower than the threshold voltage.

The regulator may further comprise
first to third switching circuits that are connected between the first and second terminals of the first to third semiconductor devices, respectively, are controlled by the controller, are turned on to connect the first and second terminals of the first to third semiconductor devices to each other, respectively, and turned off to disconnect the first and second terminals of the first to third semiconductor devices from each other, respectively, and
the controller stops supplying the control signals to the first terminals and turning off the first to third switching circuits when the charging voltage for the battery is lower than the threshold voltage.

In the regulator,
the first bipolar transistor is an NPN type bipolar transistor, and
the second bipolar transistor is a PNP type bipolar transistor.

In the regulator,
the rectifying circuit has:
a first diode that is connected to an output terminal of U phase of the three-phase alternating-current generator at the anode thereof and to the positive side of the battery at the cathode thereof;
a second diode that is connected to an output terminal of V phase of the three-phase alternating-current generator at the anode thereof and to the positive side of the battery at the cathode thereof;
a third diode that is connected to an output terminal of W phase of the three-phase alternating-current generator at the anode thereof and to the positive side of the battery at the cathode thereof;
a fourth diode that is connected to the output terminal of the U phase of the three-phase alternating-current generator at the cathode thereof and to the negative side of the battery at the anode thereof;
a fifth diode that is connected to the output terminal of the V phase of the three-phase alternating-current generator at the cathode thereof and to the negative side of the battery at the anode thereof; and
a sixth diode that is connected to the output terminal of the W phase of the three-phase alternating-current generator at the cathode thereof and to the negative side of the battery at the anode thereof.

In the regulator, the first to third switching circuits may be transistors.

In the regulator, the controller may output the control signals only for a certain period.

In the regulator, the control signals may be pulse waves.

In the regulator, the negative side of the battery may be grounded.

A battery charging apparatus according to one aspect of the invention is a battery charging apparatus that charges a battery, comprises:
a three-phase alternating-current generator is configured to supply an alternating-current voltage for charging a battery; and
the regulator.

A battery charging system according to one aspect of the invention is a battery charging system that charges a battery, comprising:
a battery; and
the battery charging apparatus.

A regulator according to an aspect of the present invention makes second transistors in first to third semiconductor devices operate by passing a current smaller than a generator short-circuiting current, rather than the generator short-circuiting current, between the emitters and the bases of the second transistors.

As a result, the Joule heat of the second transistors (the product of the base-emitter voltage "Vbe" of the second transistor and the current flowing between the emitter and the base of the second transistor) is reduced, the power loss is reduced compared with the prior art described above, and the size of the radiator fin can be reduced.

In addition, when overdischarge occurs, the first to third semiconductor devices can be turned off with higher reliability by turning off the switching circuits to forcedly eliminate the positive feedback current.

That is, the regulator according to the aspect of the present invention can reduce the power loss and more appropriately control charging of the battery.

### [Brief Description of the Drawings]

[Fig. 1] Figure 1 is a diagram showing an example of a configuration of a battery charging system 1000 according to an embodiment 1 of the present invention, which is an aspect of the present invention.
[FIG. 2] Figure 2 is a circuit diagram showing an example of a circuit configuration of first to third semiconductor devices "T1" to "T3" of a battery charging apparatus 100 shown in Figure 1.
[FIG. 3] Figure 3 is a diagram showing an example of a configuration of a battery charging system 2000 according to the embodiment 2 of the present invention, which is an aspect of the present invention.
[FIG. 4] Figure 4 is a diagram showing an example of a configuration of a conventional battery charging system 1000A.
[FIG. 5] Figure 5 is a circuit diagram showing an example of a circuit configuration of the first to third thyristors "S1" to "S3" of the battery charging apparatus shown in Figure 4.

### [Best Mode for Carrying Out the Invention]

In the following, embodiments of the present invention will be described with reference to the drawings.

### (Embodiment 1)

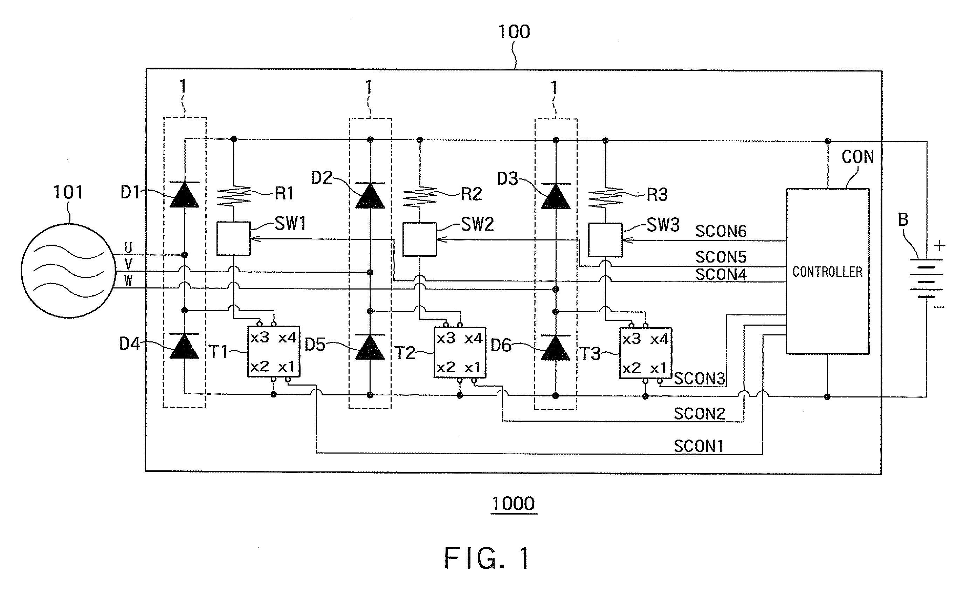

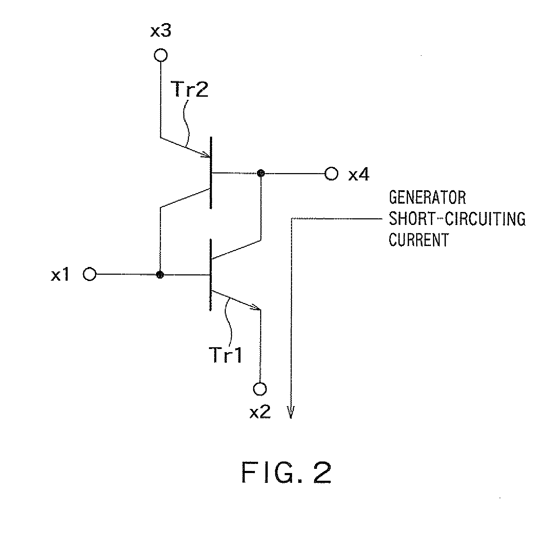

Figure 1 is a diagram showing an example of a configuration of a battery charging system 1000 according to an embodiment 1 of the present invention, which is an aspect of the present invention. Figure 2 is a circuit diagram showing an example of a circuit configuration of first to third semiconductor devices "T1" to "T3" of a battery charging apparatus 100 shown in Figure 1.

As shown in Figure 1, the battery charging system 1000 that charges a battery has a battery "B", a three-phase alternating-current generator 101, and a regulator 100. Note that the three-phase alternating-current generator 101 and the regulator 100 form the battery charging apparatus that charges the battery "B".

The battery "B" has a positive terminal (positive side) and a negative terminal (negative side) and is capable of being charged and discharging through the terminals. The negative side of the battery is grounded.

The three-phase alternating-current generator 101 is configured to generate an alternating-current voltage for charging the battery "B" and supply the alternating-current voltage through output terminals of the three phases (U phase, V phase, and W phase).

The regulator 100 is configured to control charging of the battery "B" by the three-phase alternating-current generator 101.

The regulator 100 has a rectifying circuit 1, a first semiconductor device "T1", a second semiconductor device "T2", a third semiconductor device "T3", a first resistive element "R1", a second resistive element "R2", a third resistive element "R3", a first switching circuit "SW1", a second switching circuit "SW2", a third switching circuit "SW3", and a controller "CON".

The rectifying circuit 1 is configured to rectify an alternating current output from the output terminal of each phase (U phase, V phase, W phase) of the three-phase alternating-current generator 101 and pass a charging current to the battery "B".

As shown in Figure 1, the rectifying circuit 1 has a first diode "D1", a second diode "D2", a third diode "D3", a fourth diode "D4", a fifth diode "D5", and a sixth diode "D6", for example.

The first diode "D1" is connected to the output terminal of the U phase of the three-phase alternating-current generator 101 at the anode thereof and to the positive side of the battery "B" at the cathode thereof.

The second diode "D2" is connected to the output terminal of the V phase of the three-phase alternating-current generator 101 at the anode thereof and to the positive side of the battery "B" at the cathode thereof.

The third diode "D3" is connected to the output terminal of the W phase of the three-phase alternating-current generator 101 at the anode thereof and to the positive side of the battery "B" at the cathode thereof.

The fourth diode "D4" is connected to the output terminal of the U phase of the three-phase alternating-current generator 101 at the cathode thereof and to the negative side of the battery "B" at the anode thereof.

The fifth diode "D5" is connected to the output terminal of the V phase of the three-phase alternating-current generator 101 at the cathode thereof and to the negative side of the battery "B" at the anode thereof.

The sixth diode "D6" is connected to the output terminal of the W phase of the three-phase alternating-current generator 101 at the cathode thereof and to the negative side of the battery "B" at the anode thereof.

The first semiconductor device "T1" has a first terminal "x1" to which a control signal "SCON1" is input, a second terminal "x2" connected to the negative side of the battery "B", a third terminal "x3" connected to the positive side of the battery "B", and a fourth terminal "x4" connected to the output terminal of the U phase of the three-phase alternating-current generator 101.

The second semiconductor device "T2" has a first terminal "x1" to which a control signal "SCON2" is input, a second terminal "x2" connected to the negative side of the battery "B", a third terminal "x3" connected to the positive side of the battery "B", and a fourth terminal "x4" connected to the output terminal of the V phase of the three-phase alternating-current generator 101.

The third semiconductor device "T3" has a first terminal "x1" to which a control signal "SCON3" is input, a second terminal "x2" connected to the negative side of the battery "B", a third terminal "x3" connected to the positive side of the battery "B", and a fourth terminal "x4" connected to the output terminal of the W phase of the three-phase alternating-current generator 101.

As shown in Figure 2, each of the first to third semiconductor devices "T1" to "T3" has a first bipolar transistor of a first conductivity type (NPN type bipolar transistor) "Tr1" and a second bipolar transistor of a second conductivity type (PNP type bipolar transistor).

The first bipolar transistor "Tr1" is connected to the first terminal "x1" at the base thereof, to the second terminal "x2" at the emitter thereof, and to the fourth terminal "x4" at the collector thereof.

The second bipolar transistor is connected to the fourth terminal "x4" at the base thereof, to the first terminal "x1" at the collector thereof, and to the third terminal "x3" at the emitter thereof.

For example, when the control signal is input to the first terminal "x1", and a base current of a predetermined value or larger flows to the first bipolar transistor "Tr1", the first bipolar transistor "Tr1" is turned on. As a result, a generator short-circuiting current flows from the fourth terminal "x4" to the second terminal "x2" through the collector and the emitter of the first bipolar transistor "Tr1". As a result, a base current of a predetermined value or larger flows to the second bipolar transistor "Tr2", and the second bipolar transistor "Tr2" is turned on. As a result, an emitter-collector current of the second bipolar transistor "Tr2" flows as a base current for the first bipolar transistor "Tr1". In other words, the first bipolar transistor "Tr1" is kept on while the emitter-collector current of the second bipolar transistor "Tr2" continues flowing.

When input of the control signal "SCON1" to "SCON3" is stopped, and the emitter-collector current of the second bipolar transistor "Tr2" stops flowing, the first and second bipolar transistors "T1" and "Tr2" are turned off.

As described above, the first to third semiconductor devices "T1" to "T3" are configured to pass a current between the fourth terminal "x4" and the second terminal "x2" when a current of a prescribed value or larger flows between the third terminal "x3" and the second terminal "x2" in response to input of the control signals "SCON1" to "SCON3", respectively. Furthermore, the first to third semiconductor devices "T1" to "T3" are configured to continue passing a current between the fourth terminal "x4" and the second terminal "x2" while a current continues flowing between the third terminal "x3" and the second terminal "x2".

The first to third semiconductor devices "T1" to "T3" cut off the current between the fourth terminal "x4" and the second terminal "x2" when input of the control signals "SCON1" to "SCON3" is stopped, and the current from the third terminal "x3" is cut off.

The first resistive element "R1" is connected between the positive side of the battery "B" and the third terminal "x3" of the first semiconductor device "T1".

The second resistive element "R2" is connected between the positive side of the battery "B" and the third terminal "x3" of the second semiconductor device "T2".

The third resistive element "R3" is connected between the positive side of the battery "B" and the third terminal "x3" of the third semiconductor device "T3".

The first switching circuit "SW1" is connected between the positive side of the battery "B" and the third terminal "x3" of the first semiconductor device "T1". The first switching circuit "SW1" is controlled by a control signal "SCON4" from the controller "CON" and is turned on to connect the positive side of the battery "B" and the third terminal "x3" of the first semiconductor device "T1" to each other and is turned off to disconnect the positive side of the battery "B" and the third terminal "x3" of the first semiconductor device "T1" from each other.

The second switching circuit "SW2" is connected between the positive side of the battery "B" and the third terminal "x3" of the second semiconductor device "T2". The second switching circuit "SW2" is controlled by a control signal "SCON5" from the controller "CON" and is turned on to connect the positive side of the battery "B" and the third terminal "x3" of the second semiconductor device "T2" to each other and is turned off to disconnect the positive side of the battery "B" and the third terminal "x3" of the second semiconductor device "T2" from each other.

The third switching circuit "SW3" is connected between the positive side of the battery "B" and the third terminal "x3" of the third semiconductor device "T3". The third switching circuit "SW3" is controlled by a control signal "SCON6" from the controller "CON" and is turned on to connect the positive side of the battery "B" and the third terminal "x3" of the third semiconductor device "T3" to each other and is turned off to disconnect the positive side of the battery "B" and the third terminal "x3" of the third semiconductor device "T3" from each other.

The first to third switching circuits "SW1" to "SW3" are each formed by a bipolar transistor (MOS transistor) that is connected between the positive side of the battery "B" and the third terminal "x3" and receives the control signal "SCON4" to "SCON6" at the base (gate) thereof, for example.

The controller "CON" is configured to detect a charging voltage for the battery "B" and control the first to third semiconductor devices "T1" to "T3" by outputting the control signals "SCON1" to "SCON3" based on the detection result. The controller "CON" outputs the control signals "SCON1" to "SCON3" only for a certain period. Therefore, the control signals "SCON1" to "SCON3" are pulse waves, for example.

In addition, the controller "CON" is configured to detect the charging voltage for the battery "B" and control the first to third switching circuits "SW1" to "SW3" by outputting the control signals "SCON4" to "SCON6" based on the detection result.

For example, when the charging voltage for the battery "B" is equal to or higher than a preset threshold voltage (an overcharge voltage, for example), the controller "CON" outputs the control signals "SCON1" to "SCON3" to the first terminals "x1" of the first to third semiconductor devices "T1" to "T3", thereby connecting the second terminals "x2" and the fourth terminals "x4" of the first to third semiconductor devices "T1" to "T3" to each other.

In this way, the output terminal of each phase (U phase, V phase, W phase) of the three-phase alternating-current generator 101 and the negative side of the battery are short-circuited.

Furthermore, for example, when the charging voltage for the battery "B" is lower than the threshold voltage, the controller "CON" stops supplying the control signals "SCON1" to "SCON3" to the first terminals "x1" of the first to third semiconductor devices "T1" to "T3" and outputs the fourth to sixth control signals "SCON4" to "SCON6" to the first to third switching circuits "SW1" to "SW3", thereby temporarily turning off the first to third switching circuits "SW1" to "SW3" (otherwise, the first to third switching circuits "SW1" to "SW3" are in the on state).

In this way, the current flowing to the first and third terminals "x1" and "x3" of the first to third semiconductor devices "T1" to "T3" stops. In other words, the current flowing between the third terminal "x3" and the second terminal "x2" stops. As a result, as described above, the first bipolar transistors "Tr1" of the first to third semiconductor devices "T1" to "T3" are turned off, and the second bipolar transistors "Tr2" are also turned off.

As a result, the current flowing between the fourth terminal "x4" and the second terminal "x2" stops in the first to third semiconductor devices "T1" to "T3". In other words, the generator short-circuiting current shown in Figure 2 is cut off.
Next, an example of an operation of the battery charging system 1000 configured as described above will be described.

First, the three-phase alternating-current generator 101 generates an alternating-current voltage for charging the battery "B" and supplies the alternating-current voltage from the output terminal of each phase (U phase, V phase and W phase). Then, the rectifying circuit 1 in the regulator 100 rectifies the alternating current output from the output terminal of each phase (U phase, V phase and W phase) of the three-phase alternating-current generator 101 and passes a charging current to the battery "B". This causes the charging voltage for the battery "B" to rise.

Then, when the charging voltage for the battery "B" is equal to or higher than a preset threshold voltage (an overcharge voltage, for example), the controller "CON" outputs the control signals "SCON1" to "SCON3" to the first terminals "x1" of the first to third semiconductor devices "T1" to "T3", thereby connecting the second terminals "x2" and the fourth terminals "x4" of the first to third semiconductor devices "T1" to "T3" to each other.

In this way, the output terminal of each phase (U phase, V phase, W phase) of the three-phase alternating-current generator 101 and the negative side of the battery are short-circuited. As a result, charging of the battery "B" stops.

As described above, at this point in time, a current smaller than the generator short-circuiting current, rather than the generator short-circuiting current, flows between the emitters and the bases of the second transistors "Tr2" of the first to third semiconductor devices "T1" to "T3".

Then, when the charging voltage for the battery "B" is lower than the threshold voltage, the controller "CON" stops supplying the control signals "SCON1" to "SCON3" to the first terminals "x1" of the first to third semiconductor devices "x1" to "T3" and outputs the fourth to sixth control signals "SCON4" to "SCON6" to the first to third switching circuits "SW1" to "SW3", thereby temporarily turning off the first to third switching circuits "SW1" to "SW3".

In this way, the current flowing to the first and second terminals "x1" and "x2" of the first to third semiconductor devices "T1" to "T3" stops. In other words, the current flowing between the third terminal "x3" and the second terminal "x2" stops. As a result, as described above, the first bipolar transistors "Tr1" of the first to third semiconductor devices "T1" to "T3" are turned off, and the second bipolar transistors "Tr2" are also turned off.

As a result, the current flowing between the fourth terminal "x4" and the second terminal "x2" stops in the first to third semiconductor devices "T1" to "T3". In other words, the generator short-circuiting current shown in Figure 2 is cut off. In this way, charging of the battery "B" is resumed.

The charging voltage for the battery "B" is maintained in the vicinity of the threshold voltage by the battery charging system 1000 repeating the operation described above.

As described above, the regulator 100 makes the second transistors "Tr2" of the first to third semiconductor devices "T1" to "T3" operate by passing a current smaller than the generator short-circuiting current, rather than the generator short-circuiting current, between the emitters and the bases of the second transistors "Tr2".

As a result, the Joule heat of the second transistors "Tr2" (the product of the base-emitter voltage "Vbe" of the second transistor and the current flowing between the emitter and the base of the second transistor), the power loss is reduced compared with the prior art described above, and the size of the radiator fin can be reduced.

In addition, since the first to third switching circuits "SW1" to "SW3" are turned off, the first to third semiconductor devices "T1" to "T3" can be turned off with higher reliability.

As described above, the regulator according to this embodiment can more appropriately control charging of the battery while reducing the power loss.

### (Embodiment 2)

In the embodiment 1, an example of the battery charging system 100 that more appropriately control charging of a battery while reducing the power loss has been described.

The first to third switching circuits "SW1" to "SW3" can be arranged in a different way as far as the first to third semiconductor devices "T1" to "T3" can be turned off.

In an embodiment 2, an example in which the first to third switching circuits "SW1" to "SW3" are arranged in a different way will be described.

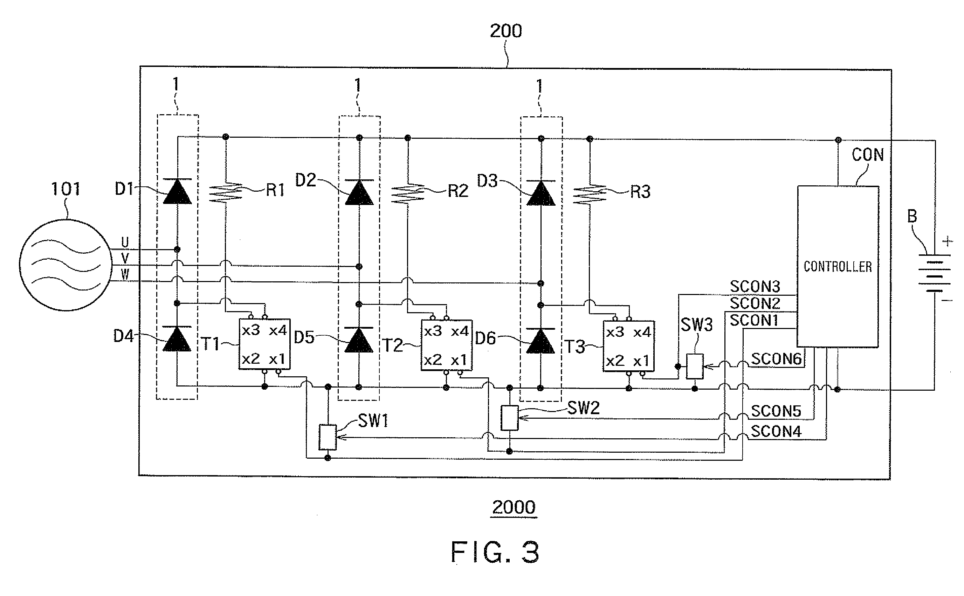

Figure 3 is a diagram showing an example of a configuration of a battery charging system 2000 according to the embodiment 2 of the present invention, which is an aspect of the present invention. In Figure 3, the same reference numerals as those in Figure 1 denote the same components as those in the embodiment 1. The first to third semiconductor devices "T1" to "T3" shown in Figure 3 have the same circuit configuration as the first to third semiconductor devices "T1" to "T3" according to the embodiment 1 shown in Figure 2, for example.

As shown in Figure 3, the battery charging system 2000 that charges a battery has a battery "B", a three-phase alternating-current generator 101, and a regulator 200. Note that the three-phase alternating-current generator 101 and the regulator 200 form the battery charging apparatus that charges the battery "B",

The regulator 200 has a rectifying circuit 1, a first semiconductor device "T1", a second semiconductor device "T2", a third semiconductor device "T3", a first resistive element "R1", a second resistive element "R2", a third resistive element "R3", a first switching circuit "SW1", a second switching circuit "SW2", a third switching circuit "SW3", and a controller "CON".

As in the embodiment 1, the first semiconductor device "T1" has a first terminal "x1" to which a control signal "SCON1" is input, a second terminal "x2" connected to the negative side of the battery "B", a third terminal "x3" connected to the positive side of the battery "B", and a fourth terminal "x4" connected to the output terminal of the U phase of the three-phase alternating-current generator 101.

As in the embodiment 1, the second semiconductor device "T2" has a first terminal "x1" to which a control signal "SCON2" is input, a second terminal "x2" connected to the negative side of the battery "B", a third terminal "x3" connected to the positive side of the battery "B", and a fourth terminal "x4" connected to the output terminal of the V phase of the three-phase alternating-current generator 101.

As in the embodiment 1, the third semiconductor device "T3" has a first terminal "x1" to which a control signal "SCON3" is input, a second terminal "x2" connected to the negative side of the battery "B", a third terminal "x3" connected to the positive side of the battery "B", and a fourth terminal "x4" connected to the output terminal of the U phase of the three-phase alternating-current generator 101.

As in the embodiment 1, as shown in Figure 2, each of the first to third semiconductor devices "T1" to "T3" has a first bipolar transistor of a first conductivity type (NPN type bipolar transistor) "T1" and a second bipolar transistor of a second conductivity type (PNP type bipolar transistor).

The first bipolar transistor "Tr1" is connected to the first terminal "x1" at the base thereof, to the second terminal "x2" at the emitter thereof, and to the fourth terminal "x4" at the collector thereof.

The second bipolar transistor is connected to the fourth terminal "x4" at the base thereof, to the first terminal "x1" at the collector thereof, and to the third terminal "x3" at the emitter thereof.

For example, when the control signal is input to the first terminal "x1", and a base current of a predetermined value or larger flows to the first bipolar transistor "Tr1", the first bipolar transistor "Tr1" is turned on. As a result, a generator short-circuiting current flows from the fourth terminal "x4" to the second terminal "x2" through the collector and the emitter of the first bipolar transistor "Tr1". As a result, a base current of a predetermined value or larger flows to the second bipolar transistor "Tr2", and the second bipolar transistor "Tr2" is turned on. As a result, an emitter-collector current of the second bipolar transistor "Tr2" flows as a base current for the first bipolar transistor "Tr1". In other words, the first bipolar transistor "T1" is kept on while the emitter-collector current of the second bipolar transistor "Tr2" continues flowing.

When input of the control signal "SCON1" to "SCON3" is stopped, and the emitter-collector current of the second bipolar transistor "Tr2" (the current between the third terminal "x3" and the second terminal "x2") stops flowing, the first and second bipolar transistors "T1" and "Tr2" are turned off.

As described above, the first to third semiconductor devices "T1" to "T3" are configured to pass a current between the fourth terminal "x4" and the second terminal "x2" when a current of a prescribed value or larger flows between the third terminal "x3" and the second terminals "x2" in response to input of the control signals "SCON1" to "SCON3", respectively. Furthermore, the first to third semiconductor devices "T1" to "T3" are configured to continue passing a current between the fourth terminal "x4" and the second terminal "x2" while a current continue flowing between the third terminal "x3" and the second terminal "x2".

The first to third semiconductor devices "x1" to "T3" cut off the current between the fourth terminal "x4" and the second terminal "x2" when input of the control signals "SCON1" to "SCON3" is stopped, and the current between the third terminal "x3" and the second terminal "x2" stops flowing (that is, the positive feedback current is zero).

The first switching circuit "SW1" is connected between the first terminal "x1" and the second terminal "x2" of the first semiconductor device "T1". The first switching circuit "SW1" is controlled by a control signal "SCON4" from the controller "CON" and is turned on to connect the first terminal "x1" and the second terminal "x2" of the first semiconductor device "T1" to each other and is turned off to disconnect the first terminal "x1" and the second terminal "x2" of the first semiconductor device "T1" from each other.

The second switching circuit "SW2" is connected between the first terminal "x1" and the second terminal "x2" of the second semiconductor device "T2". The second switching circuit "SW2" is controlled by a control signal "SCON5" from the controller "CON" and is turned on to connect the first terminal "x1" and the second terminal "x2" of the second semiconductor device "T2" to each other and is turned off to disconnect the first terminal "x1" and the second terminal "x2" of the second semiconductor device "T2" from each other.

The third switching circuit "SW3" is connected between the first terminal "x1" and the second terminal "x2" of the third semiconductor device "T3". The third switching circuit "SW3" is controlled by a control signal "SCON6" from the controller "CON" and is turned on to connect the first terminal "x1" and the second terminal "x2" of the third semiconductor device "T3" to each other and is turned off to disconnect the first terminal "x1" and the second terminal "x2" of the third semiconductor device "T3" from each other.

The first to third switching circuits "SW1" to "SW3" are each formed by a bipolar transistor (MOS transistor) that is connected between the first terminal "x1" and the second terminal "x2" and receives the control signal "SCON4" to "SCON6" at the base (gate) thereof, for example.

As in the embodiment 1, the controller "CON" is configured to detect a charging voltage for the battery "B" and control the first to third semiconductor devices "T1" to "T3" by outputting the control signals "SCON1" to "SCON3" based on the detection result. The controller "CON" outputs the control signals "SCON1" to "SCON3" only for a certain period. Therefore, the control signals "SCON1" to "SCON3" are pulse waves, for example.

In addition, as in the embodiment 1, the controller "CON" is configured to detect the charging voltage for the battery "B" and control the first to third switching circuits "SW1" to "SW3" by outputting the control signals "SCON4" to "SCON6" based on the detection result.

For example, as in the embodiment 1, when the charging voltage for the battery "B" is equal to or higher than a preset threshold voltage (an overcharge voltage, for example), the controller "CON" outputs the control signals "SCON1" to "SCON3" to the first terminals "x1" of the first to third semiconductor devices "T1" to "T3", thereby connecting the second terminals "x2" and the fourth terminals "x4" of the first to third semiconductor devices "T1" to "T3" to each other.

In this way, the output terminal of each phase (U phase, V phase, W phase) of the three-phase alternating-current generator 101 and the negative side of the battery are short-circuited.

Furthermore, for example, as in the embodiment 1, when the charging voltage for the battery "B" is lower than the threshold voltage, the controller "CON" stops supplying the control signals "SCON1" to "SCON3" to the first terminals "x1" of the first to third semiconductor devices "T1" to "T3" and outputs the fourth to sixth control signals "SCON4" to "SCON6" to the first to third switching circuits "SW1" to "SW3", thereby temporarily turning on the first to third switching circuits "SW1" to "SW3" (otherwise, the first to third switching circuits "SW1" to "SW3" are in the off state).

In this way, the first terminals "x1" and the second terminals "x2" of the first to third semiconductor devices "T1" to "T3" are short-circuited, and the positive feedback current stops flowing. In other words, the current flowing between the third terminal "x3" and the second terminal "x2" stops. As a result, as described above, the first bipolar transistors "Tr1" of the first to third semiconductor devices "T1" to "T3" are turned off, and the second bipolar transistors "Tr2" are also turned off.

As a result, the current flowing between the fourth terminal "x4" and the second terminal "x2" stops in the first to third semiconductor devices "T1" to "T3". In other words, the generator short-circuiting current shown in Figure 2 is cut off.

The remainder of the configuration of the regulator 200 is the same as that of the regulator 100 according to the embodiment 1.

Next, an example of an operation of the battery charging system 2000 configured as described above will be described.

First, as in the embodiment 1, the three-phase alternating-current generator 101 generates an alternating-current voltage for charging the battery "B" and supplies the alternating-current voltage from the output terminal of each phase (U phase, V phase and W phase). Then, the rectifying circuit 1 in the regulator 200 rectifies the alternating current output from the output terminal of each phase (U phase, V phase and W phase) of the three-phase alternating-current generator 101 and passes a charging current to the battery "B", This causes the charging voltage for the battery "B" to rise.

Then, as in the embodiment 1, when the charging voltage for the battery "B" is equal to or higher than a preset threshold voltage (an overcharge voltage, for example), the controller "CON" outputs the control signals "SCON1" to "SCON3" to the first terminals "x1" of the first to third semiconductor devices "T1" to "T3", thereby connecting the second terminals "x2" and the fourth terminals "x4" of the first to third semiconductor devices "T1" to "T3" to each other.

In this way, the output terminal of each phase (U phase, V phase, W phase) of the three-phase alternating-current generator 101 and the negative side of the battery are short-circuited. As a result, charging of the battery "B" stops.

As described above, at this point in time, a current smaller than the generator short-circuiting current, rather than the generator short-circuiting current, flows between the emitters and the bases of the second transistors "Tr2" of the first to third semiconductor devices "T1" to "T3".

Then, when the charging voltage for the battery "B" is lower than the threshold voltage, the controller "CON" stops supplying the control signals "SCON1" to "SCON3" to the first terminals "x1" of the first to third semiconductor devices "T1" to "T3" and outputs the fourth to sixth control signals "SCON4" to "SCON6" to the first to third switching circuits "SW1" to "SW3", thereby temporarily turning on the first to third switching circuits "SW1" to "SW3".

In this way, the first terminal "x1" and the second terminal "x2" of the first to third semiconductor devices "T1" to "T3" are short-circuited, and the positive feedback current stops flowing. In other words, the current flowing between the third terminal "x3" and the second terminal "x2" stops. As a result, as described above, the first bipolar transistors "Tr1" of the first to third semiconductor devices "T1" to "T3" are turned off, and the second bipolar transistors "Tr2" are also turned off.

As a result, the current flowing between the fourth terminal "x4" and the second terminal "x2" stops in the first to third semiconductor devices "T1" to "T3". In other words, the generator short-circuiting current shown in Figure 2 is cut off. In this way, charging of the battery "B" is resumed.

The charging voltage for the battery "B" is maintained in the vicinity of the threshold voltage by the battery charging system 2000 repeating the operation described above.

As described above, the regulator 200 makes the second transistors "Tr2" of the first to third semiconductor devices "T1" to "T3" operate by passing a current smaller than the generator short-circuiting current, rather than the generator short-circuiting current, between the emitters and the bases of the second transistors "Tr2".

As a result, the Joule heat of the second transistors "Tr2" (the product of the base-emitter voltage "Vbe" of the second transistor and the current flowing between the emitter and the base of the second transistor), the power loss is reduced compared with the prior art described above, and the size of the radiator fin can be reduced.

In addition, since the positive feedback current is forcedly eliminated by turning on the first to third switching circuits "SW1" to "SW3", the first to third semiconductor devices "T1" to "T3" can be turned off with higher reliability.

As described above, as with the regulator according to the embodiment 1, the regulator according to this embodiment can more appropriately control charging of the battery while reducing the power loss.

Note that the configuration of the first to third semiconductor devices "T1" to "T3" shown in Figure 2 and described above with regard to the embodiments are given only for the illustrative purpose, and any other configuration that has similar functionalities can be used according to the present invention.

## Claims

1. A regulator that controls charging of a battery by a three-phase alternating-current generator, comprising :
a rectifying circuit that rectifies an alternating current output from an output terminal of each phase of the three-phase alternating-current generator and passes a charging current to the battery;
first to third semiconductor devices each of which has a first terminal to which a control signal is input, a second terminal connected to a negative side of the battery, a third terminal connected to a positive side of the battery, and a fourth terminal connected to an output terminal of a corresponding phase of the three-phase alternating-current generator; and
a controller that detects a charging voltage for the battery and outputs the control signals based on a detection result,
wherein the first to third semiconductor devices pass a current between the fourth terminal and the second terminal in response to a current of a prescribed value or larger flowing between the third terminal and the second terminal and continue passing the current between the fourth terminal and the second terminal while the current continues flowing between the third terminal and the second terminal, and
the controller outputs the control signals to the first terminals of the first to third semiconductor devices to connect the second terminals and the fourth terminals of the first to third semiconductor devices to each other, thereby short-circuiting the output terminal of each phase of the three-phase alternating-current generator and the negative side of the battery to each other, when the charging voltage for the battery is equal to or higher than a preset threshold voltage.

2. The regulator according to Claim 1, wherein each of the first to third semiconductor devices has:
a first bipolar transistor of a first conductivity type that is connected to the first terminal at the base thereof, to the second terminal at the emitter thereof, and to the fourth terminal at the collector thereof; and
a second bipolar transistor of a second conductivity type that is connected to the fourth terminal at the base thereof, to the first terminal at the collector thereof, and to the third terminal at the emitter thereof.

3. The regulator according to Claim 1, further comprising:
first to third resistive elements that are connected between the positive side of the battery and the third terminals of the first to third semiconductor devices, respectively.

4. The regulator according to Claim 1, further comprising:
first to third switching circuits that are connected between the positive side of the battery and the third terminals of the first to third semiconductor devices, respectively, are controlled by the controller, are turned on to connect the positive side of the battery and the third terminals of the first to third semiconductor devices to each other, respectively, and turned off to disconnect the positive side of the battery and the third terminals of the first to third semiconductor devices from each other, respectively, and
the controller stops supplying the control signals to the first terminals and turning off the first to third switching circuits when the charging voltage for the battery is lower than the threshold voltage.

5. The regulator according to Claim 1, further comprising:
first to third switching circuits that are connected between the first and second terminals of the first to third semiconductor devices, respectively, are controlled by the controller, are turned on to connect the first and second terminals of the first to third semiconductor devices to each other, respectively, and turned off to disconnect the first and second terminals of the first to third semiconductor devices from each other, respectively, and
the controller stops supplying the control signals to the first terminals and turning off the first to third switching circuits when the charging voltage for the battery is lower than the threshold voltage.

6. The regulator according to Claim 2, wherein
the first bipolar transistor is an NPN type bipolar transistor, and
the second bipolar transistor is a PNP type bipolar transistor.

7. The regulator according to Claim 1, wherein the rectifying circuit has:
a first diode that is connected to an output terminal of U phase of the three-phase alternating-current generator at the anode thereof and to the positive side of the battery at the cathode thereof;
a second diode that is connected to an output terminal of V phase of the three-phase alternating-current generator at the anode thereof and to the positive side of the battery at the cathode thereof;
a third diode that is connected to an output terminal of W phase of the three-phase alternating-current generator at the anode thereof and to the positive side of the battery at the cathode thereof;
a fourth diode that is connected to the output terminal of the U phase of the three-phase alternating-current generator at the cathode thereof and to the negative side of the battery at the anode thereof;
a fifth diode that is connected to the output terminal of the V phase of the three-phase alternating-current generator at the cathode thereof and to the negative side of the battery at the anode thereof; and
a sixth diode that is connected to the output terminal of the W phase of the three-phase alternating-current generator at the cathode thereof and to the negative side of the battery at the anode thereof.

8. The regulator according to Claim 4, wherein
the first to third switching circuits are transistors.

9. The regulator according to Claim 5, wherein
the first to third switching circuits are transistors.

10. The regulator according to Claim 1, wherein
the controller outputs the control signals only for a certain period.

11. The regulator according to Claim 10, wherein
the control signals are pulse waves.

12. The regulator according to Claim 1, wherein
the negative side of the battery is grounded.

13. A battery charging apparatus that charges a battery, comprising:
a three-phase alternating-current generator is configured to supply an alternating-current voltage for charging a battery; and
a regulator according to Claim 1.

14. A battery charging system that charges a battery, comprising:
a battery; and
a battery charging apparatus according to Claim 13.
